Europäisches Patentamt

European Patent Office

Office européen des brevets

(19)

(11) Veröffentlichungsnummer: **0 140 262**

**A1**

(12) # EUROPÄISCHE PATENTANMELDUNG

(21) Anmeldenummer: 84112358.1

(22) Anmeldetag: 13.10.84

(51) Int. Cl.⁴: **A 01 C 15/00**

(30) Priorität: 28.10.83 US 546698

(43) Veröffentlichungstag der Anmeldung:
08.05.85 Patentblatt 85/19

(84) Benannte Vertragsstaaten:
DE FR GB

(71) Anmelder: **DEERE & COMPANY**
**1 John Deere Road**
**Moline Illinois 61265(US)**

(72) Erfinder: **Swales, Barton Lee**
**1708 E. 4th Street**
**Coal Valley Illinois 61240(US)**

(74) Vertreter: **Sartorius, Peter et al,**
**DEERE & COMPANY European Office, Patent**
**Department Postfach 503 Steubenstrasse 36-42**
**D-6800 Mannheim 1(DE)**

(54) **Sävorrichtung.**

(57) Die Sävorrichtung (10) einer Sämaschine ist auf einem Rahmen (14) lösbar angeschlossen und mittels Verriegelungshaken (39, 44) sicherbar. Soll die Sävorrichtung (10) von dem Rahmen (14) abgenommen werden, so wird sie nach Lösen der Verriegelungselemente nach hinten verschoben, so daß eine von zwei Aussparungen (52, 54), die in einer an der Sämaschine vorgesehenen Halterung (50) angeordnet ist, auf einem am Rahmen angeordneten Zapfen (48) aufsitzt. Nun läßt sich die Sävorrichtung (10) in eine Schräglage verschwenken. Hierdurch ermöglichen die an der Sävorrichtung (10) vorgesehenen Rollen (56) eine leichte Verschiebung der Sävorrichtung (10) auf dem Rahmen so weit nach hinten, daß die Bedienungsperson die Sävorrichtung ohne weiteres von dem Rahmen (14) abnehmen kann.

Fig. 7

**DEERE & COMPANY**

EUROPEAN OFFICE
       - 1 -
      **0140262**
Case 12564 EP

## Sävorrichtung

Die Erfindung bezieht sich auf eine Sävorrichtung für eine Sämaschine mit einem an einem Hauptrahmen angeschlossenen Rahmen zur Aufnahme von mindestens einem abnehmbaren Sammelbehälter, der über Arretierungselemente auf dem Rahmen festsetzbar ist.

Es ist bereits eine Sävorrichtung der eingangs aufgeführten Art bekannt (US-A-3 714 913), die an einem Hauptrahmen einen vertikal verschwenkbaren Rahmen zur Aufnahme von Sammelbehältern aufweist. Die Sammelbehälter weisen hierzu vorne und hinten seitlich herausstehende Zapfen auf, die in in dem Rahmen vorgesehene Schlitzöffnungen einführbar sind. Da die Sammelbehälter in Reihen und hintereinander angeordnet sind, ist die Montage, beispielsweise des hinteren Sammelbehälters, sehr umständlich und schwierig, da er über den gesamten Rahmen nach vorne gehoben werden muß, um ihn dann von der Maschine abnehmen zu können. Das Abbauen des hinteren Sammelbehälters wird insbesondere durch die vielen Vorbauten, die an der Sämaschine anzutreffen sind, erschwert.

Demgegenüber liegt der Erfindung die Aufgabe zugrunde, den Rahmen und die Sammelbehälter derart auszubilden und anzuordnen, daß ein schneller An- und Abbau insbesondere der Sammelbehälter möglich ist, die nicht ohne weiteres an der Maschine zugänglich sind. Diese Aufgabe wird dadurch gelöst, daß der Sammelbehälter im hinteren Bereich auf Tragelementen abstützbare und um diese schwenkbare Halterungen und bei einer Schrägstellung des Sammelbehälters eine horizontale Verstellung des Sammelbehälters zulassende Gleitelemente aufweist. Durch die vorteilhafte Ausbildung und Anordnung des Sammelbehälters und des zugehörigen Rahmens lassen sich beispielsweise auch die hinteren Sammelbehälter, beispielsweise für Erntegut, die hinter den Sammelbehältern für Düngemittel angeordnet sind, abbauen, da diese hierzu lediglich angehoben werden müßten, um dann auf den Rahmen horizontal in eine Stellung verschoben zu werden, in der sie ohne weiteres von der Bedienungsperson abgehoben werden können. Dies wird dadurch erleichtert, daß die Halterung eine erste nach unten gerichtete, offene Raststelle bzw. Aussparung, die eine Horizontalverstellung des Sammelbehälters unterbindet, und eine zweite Aussparung aufweist, die auf einem am Rahmen vorgesehenen Zapfen abstützbar ist und eine Verschwenkung der Halterung auf diesem Zapfen gestattet. Durch die Verwendung der an den Halterungen vorgesehenen Aussparungen erhält man die Möglichkeit, den Sammelbehälter ohne weiteres auf den Zapfen zu verschwenken und dann über die am Sammelbehälter angeordneten Rollen in eine Stellung zu verschieben, bis sie von dem Sammelbehälter ohne weiteres abgehoben werden können. Dabei ist es vorteilhaft, daß die Zapfen seitlich an den Rahmen bildenden Paneelen angeordnet sind und zur Aufnahme der konkav ausgebildeten Aussparung dienen und daß die Gleitelemente als Rollen ausgebildet und an der Halterung vorgesehen sind. Vorteilhaft ist es außerdem, daß die beiden Aussparungen in der Halterung je eine konkav und die horizontal verlaufenden Zapfen je eine konvex ausgebildete Oberfläche aufweisen. Durch die konkave Ausbildung der Aussparung wird eine Arretierung der Halterung in horizontaler Richtung auf einfache Weise gewährleistet. Eine einfache Arretierung des hinteren Teils des Sammelbehälters erhält man dadurch, daß an der Rückseite der Sävorrichtung im Bereich der Halterung mindestens ein Verriegelungshaken vorgesehen ist, der mittels einer verstellbaren Verriegelungslasche arretierbar ist. Dabei ist es vorteilhaft, daß im vorderen Bereich der Sävorrichtung ein nach vorne offener Haken vorgesehen ist, der durch Verschieben der Sävorrichtung nach vorne einen an dem Paneel vorgesehenen Zapfen untergreift. Ist beispielsweise der Sammelbehälter auf den Rahmen abgesetzt, so kann er so weit nach vorne verschoben werden, bis er mit seinem vorderen Hakenteil die am Rahmen angeordneten Zapfen untergreift. Danach läßt sich die Verriegelungslasche in eine Position verschwenken, in der sie den am hinteren Teil des Sammelbehälters vorgesehenen Haken übergreift. In dieser Stellung ist die zweite Aussparung auf den Zapfen aufgesetzt. Hierdurch erhält man eine gute Arretierung des Sammelbehälters im Arbeitseinsatz.

In weiterer Ausgestaltung der Erfindung ist es vorteilhaft, daß der Rahmen aus zwei parallel zueinander verlaufenden Paneelen gebildet ist, wobei am hinteren Ende der Sävorrichtung zwei Halterungen starr angeordnet sind, die mit ihren Aussparungen auf die Zapfen aufsetzbar sind und die sich jeweils an der Außenseite der Paneele vorbei erstrecken und gegen sie zur Anlage gebracht werden können. Vorteilhaft ist es außerdem, daß beim Aufsetzen der ersten Aussparung auf den entsprechenden Zapfen und bei Einnahme der horizontalen Arbeitsstellung der Sävorrichtung eine Antriebsverbindung zwischen einer in der Sävorrichtung vorgesehenen Dosiervorrichtung und einer Hauptantriebsvorrichtung automatisch herstellbar ist. Da sich die beiden Halterungen mit ihren Aussparungen seitlich an den Außenseiten der Paneele vorbei erstrecken, erhält man auch eine gute Sicherung des Sammelbehälters in einer Richtung quer zur Verstellrichtung des Sammelbehälters. Da durch das Einschwenken des Sammelbehälters in die horizontale Lage, die der Arbeitsstellung der Sämaschine entspricht, gleichzeitig auch die Antriebsverbindung zwischen einem Antriebsrad der Dosiervorrichtung und dem Hauptantrieb hergestellt werden kann, läßt sich die Montagezeit des Sammelbehälters auf ein Minimum reduzieren.

Im folgenden wird die Erfindung anhand von einen Ausführungsweg darstellenden Zeichnungen näher erläutert. Es zeigt:

Fig. 1 eine perspektivische Darstellung einer Sävorrichtung mit einem Sammelbehälter für Erntegut und einem Sammelbehälter für Düngemittel,

Fig. 2 eine Seitenansicht der Sävorrichtung mit abgenommenem Sammelbehälter für Düngemittel,

Fig. 3 eine Draufsicht der Sävorrichtung entlang der Linie 3 - 3 gemäß Fig. 2 mit zahlreichen nebeneinander angeordneten Sävorrichtungen, die an einem Hauptrahmen dicht nebeneinander angeordnet sind, wobei zur besseren Darstellung der Antriebsvorrichtung Teile des Sammelbehälters für Saatgut weggeschnitten und der Sammelbehälter für Düngemittel entfernt worden ist,

Fig. 4 eine Seitenansicht entlang der Linie 4 - 4 gemäß Fig. 3, wobei der Sammelbehälter für Saatgut mittels Arretierungselementen festgesetzt ist,

Fig. 5 eine perspektivische Darstellung der Dosiervorrichtung des Sammelbehälters für Saatgut und der zugehörigen Antriebsvorrichtung,

Fig. 6 eine ähnliche Ansicht wie in Fig. 4, wobei der Sammelbehälter für Saatgut in einer Stellung gezeigt ist, in der er verschwenkt werden kann,

Fig. 7 eine Seitenansicht des Sammelbehälters für Saatgut, der nach hinten abgekippt ist,

Fig. 8 eine ähnliche Ansicht wie in Fig. 2, wobei jedoch der Sammelbehälter für Saatgut nach hinten verschoben ist, so daß die Bedienungsperson den Sammelbehälter ohne weiteres entnehmen kann.

In der Zeichnung ist mit 10 eine Sävorrichtung einer in der Zeichnung nicht dargestellten Sämaschine bezeichnet, deren Rahmen 14 über parallel verlaufende Lenker 12 an einen Hauptrahmen 16 höhenverschwenkbar angeschlossen ist. Die parallel verlaufenden Lenker 12 gestatten jeweils eine Vertikalverstellung einer einzelnen Sävorrichtung gegenüber den übrigen Sävorrichtungen, die an dem Hauptrahmen 16 ebenfalls angeschlossen sind.

Der Rahmen 14 stützt sich über einstellbare Laufräder 18 auf dem Boden ab, die auch die Höhenlage der nachgeschalteten Furchenöffner beeinflussen. Eine aus zwei Scheibenscharen gebildete Furchenzudeckvorrichtung 20 befindet sich hinter den Laufrädern 18 und ist an dem Rahmen 14 angeschlossen. Die Furchenzudeckvorrichtung 20 erstreckt sich nach hinten und unten und dient dazu, daß in die Furche abgelegtes Saatgut mit Erdreich bedeckt wird.

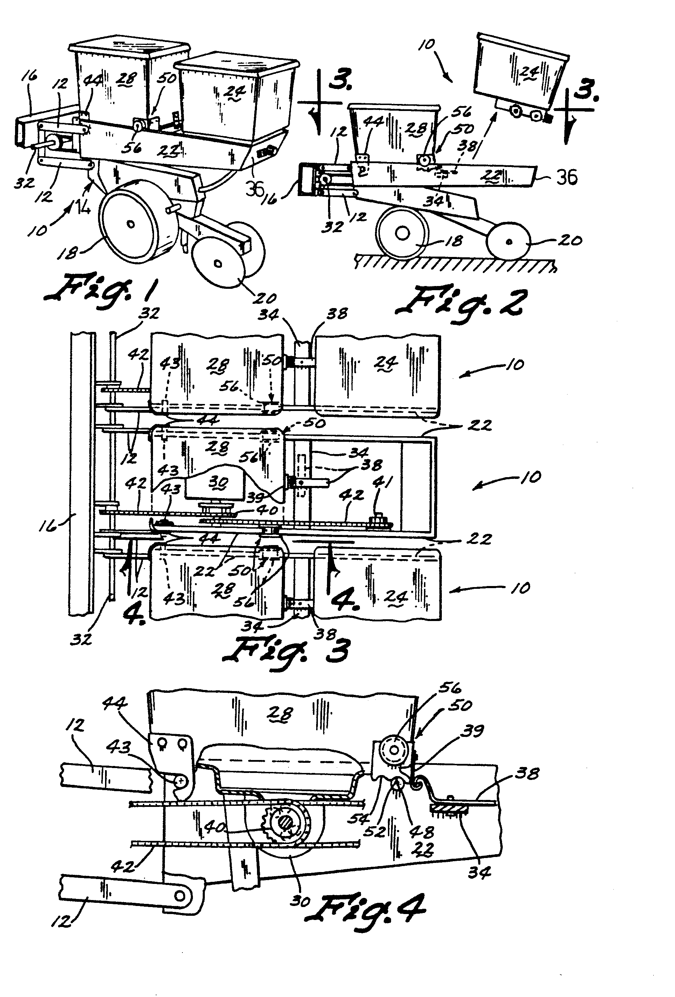

Der obere Teil des Rahmens 14 weist zwei sich in Fahrtrichtung erstreckende, parallel zueinander verlaufende Paneele 22 auf, die zur Aufnahme eines Sammelbehälters 24 zur Aufnahme von Düngemittel mit einer Dosiervorrichtung 26 (siehe Fig. 2) und zur Aufnahme eines Sammelbehälters 28 dienen, der mit einer Dosiervorrichtung 30 (siehe Fig. 3) ausgerüstet ist. Beide Dosiervorrichtungen 26 und 30 sind wirkungsmäßig mit einem Hauptantrieb 32 verbunden.

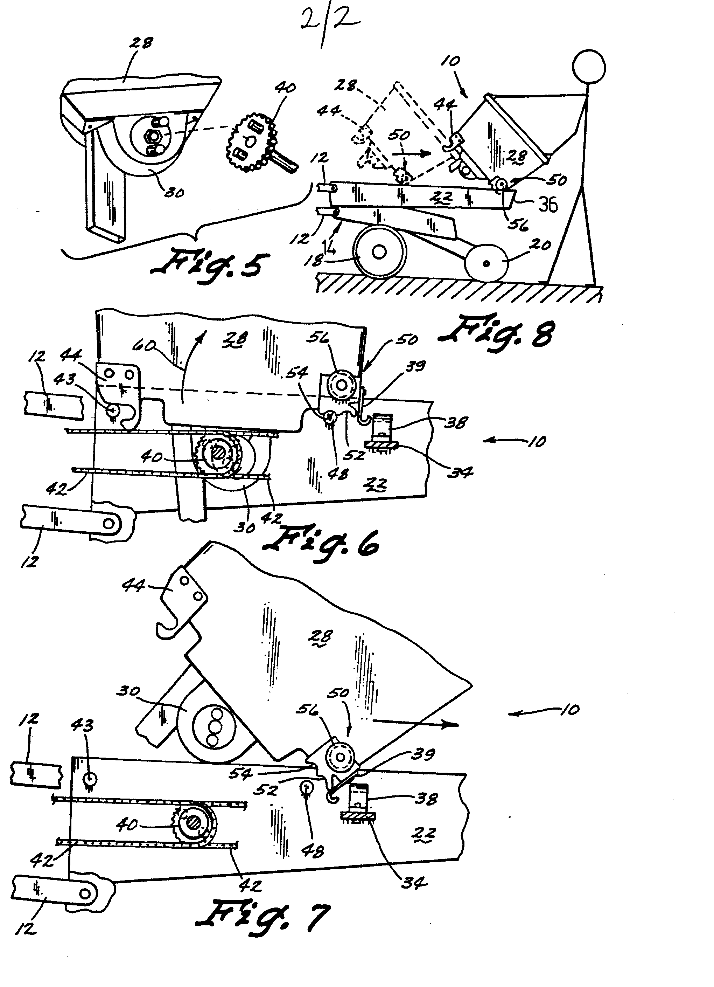

Wie aus den Figuren 3 und 4 hervorgeht, sind die Seitenpaneele über Streben 34 und eine Endplatte 36 miteinander verbunden. An der Strebe 34 ist eine Verriegelungslasche 38 gelenkig angeschlossen, die wahlweise mit einem Verriegelungshaken 39 verbunden werden kann, der an das hintere untere Ende des Sammelbehälters 28 für Saatgut angeschlossen ist. Der Hauptantrieb 32 steht über eine Kette 42 mit einem Antriebsrad 40 der Dosiervorrichtung 30 für Erntegut in Antriebsverbindung. Mit dem Antriebsrad 40 ist auch ein in der Zeichnung nicht dargestelltes Antriebsrad der Dosiervorrichtung für Düngemittel über die Kette 42 antriebsverbunden. Ein Zapfen 43 befindet sich am hinteren oberen Ende eines jeden Paneels 22 und erstreckt sich von diesem nach außen, um auf diese Weise mit einem Haken 44 in Eingriff gebracht zu werden, der an der vorderen Kante des Sammelbehälters 28 angeschlossen ist. Ein weiterer Zapfen 48 befindet sich etwa in der Mitte des Paneels 22 und erstreckt sich ebenfalls von diesem nach außen, um mit einer Halterung 50 in Eingriff gebracht zu werden, die an der hinteren Kante des Sammelbehälters 28 für Saatgut angeschlossen ist.

Wie aus den Figuren 1 und 4 hervorgeht, weist die Halterung 50 eine nach unten offene, konkav ausgebildete Raststelle 52 sowie dicht daneben eine konkav ausgebildete Raststelle 54 auf, die am unteren Ende der Halterung 50 vorgesehen sind. Eine Rolle 56 ist ebenfalls an der Halterung 50 drehbar gelagert und erstreckt sich von dieser nach außen, um wahlweise auf der oberen Kante der Paneele 22 aufgesetzt zu werden.

Befindet sich die Sävorrichtung 10 in Arbeitsstellung, so ist der Sammelbehälter 28 für Saatgut mit dem Rahmen 14 gemäß Fig. 4 verbunden und entsprechend gesichert. In dieser Stellung ist die Dosiervorrichtung 30 wirkungsmäßig mit dem Antriebsrad 40 und die Verriegelungslasche 38 mit dem Verriegelungshaken 39 verbunden. Ferner untergreift der Haken 44 den entsprechenden Zapfen 43, um somit den Sammelbehälter abzustützen und ihn gegen eine Vorwärtsverstellung und eine Aufwärtsverstellung zu sichern. Dabei stützt sich die Raststelle 52 der Halterung 50 auf dem konvexen Teil des Zapfens 48 entsprechend ab.

Um den Sammelbehälter 28 von der Sävorrichtung abbauen zu können, muß die Bedienungsperson zuerst den Sammelbehälter 24 (siehe Fig. 2) abbauen, um ausreichend Zugang zum Sammelbehälter 28 von der Rückseite der Sävorrichtung 10 aus zu haben. Danach wird die Verriegelungslasche 38 verschwenkt und somit der Verriegelungshaken 39 freigegeben (siehe Fig. 3). Der Sammelbehälter für Saatgut läßt sich danach etwas nach hinten in eine Stellung verstellen (siehe Fig. 6), in der er verschwenkt werden kann. Dabei stützt sich die Raststelle 54 auf dem Zapfen 48 ab.

In der Stellung gemäß Fig. 6 ist auch die Dosiervorrichtung 30 nach hinten verstellt, und zwar so, daß die Antriebsverbindung zwischen dem Antriebsrad 40 und der Dosiervorrichtung 30 unterbrochen ist. Der vordere Haken 44 stützt sich mit einem Teil weiterhin auf dem Zapfen 43 ab, wobei der untere Schnabelteil des Hakens so weit nach hinten bewegt ist, daß eine Aufwärtsverschwenkung des Sammelbehälters 28 möglich ist. Die hintere Raststelle 54 steht nun in Eingriff mit dem Zapfen 48, und das vordere Ende des Sammelbehälters 28 kann um einen Kreisradius 60 verschwenkt werden, da sich die Halterung 50 mit der Raststelle 54 beim Schwenkvorgang auf dem Zapfen 48 abstützt.

Ist der Sammelbehälter 28 mit seinem vorderen Ende nach oben verschwenkt und nimmt dabei eine Stellung gemäß Fig. 7 ein, in der die Unterseite des Sammelbehälters 28 mit der Oberkante der Paneele 22 einen Winkel von ca. 45° bildet, so stützen sich die Rollen 56 auf der oberen Kante der Paneele 22 ab, und die Raststelle 54 bewegt sich von dem Zapfen 48 weg nach oben. In der Stellung gemäß Fig. 7 kann der Sammelbehälter 28 mittels der Rollen 56 auf den Seitenpaneelen 22 nach hinten verschoben und dann in der Stellung gemäß Fig. 8 abgenommen werden. In der geneigt verlaufenden Stellung (Winkel 45°) ist das Gewicht des Sammelbehälters 28 ausbalanciert, so daß die Bedienungsperson den Sammelbehälter ohne weiteres handhaben kann. In dieser Stellung weist die Dosiervorrichtung 30 einen ausreichenden Abstand oberhalb der Strebe 34 auf.

Nach einer entsprechenden Reparatur bzw. einer Wartung kann der Sammelbehälter 28 wieder auf dem Rahmen 14 der Sävorrichtung plaziert werden, wobei die einzelnen Arbeitsschritte in umgekehrter Reihenfolge vorgenommen werden, wie sie bei der Abnahme des Sammelbehälters aufgezeigt worden sind.

## Patentansprüche

1. Sävorrichtung (10) für eine Sämaschine mit einem an einem Hauptrahmen (16) angeschlossenen Rahmen (14) zur Aufnahme von mindestens einem abnehmbaren Sammelbehälter (28), der über Arretierungselemente auf dem Rahmen (14) festsetzbar ist, dadurch gekennzeichnet, daß der Sammelbehälter (28) im hinteren Bereich auf Tragelementen (Zapfen 48) abstützbare und um diese schwenkbare Halterungen (50) und bei einer Schrägstellung des Sammelbehälters (28) eine horizontale Verstellung des Sammelbehälters (28) zulassende Gleitelemente (Rollen 56) aufweist.

2. Sävorrichtung nach Anspruch 1, dadurch gekennzeichnet, daß die Halterung (50) eine erste nach unten gerichtete, offene Raststelle bzw. Aussparung (52), die eine Horizontalverstellung des Sammelbehälters (28) unterbindet, und eine zweite Aussparung (54) aufweist, die auf einem am Rahmen (14) vorgesehenen Zapfen (48) abstützbar ist und eine Verschwenkung der Halterung (50) auf diesem Zapfen (48) gestattet.

3. Sävorrichtung nach Anspruch 1 oder 2, dadurch gekennzeichnet, daß die Zapfen (48) seitlich an den Rahmen (14) bildenden Paneelen (22) angeordnet sind und zur Aufnahme der konkav ausgebildeten Aussparung (52) dienen.

4. Sävorrichtung nach einem oder mehreren der vorherigen Ansprüche, dadurch gekennzeichnet, daß die Gleitelemente als Rollen (56) ausgebildet und an der Halterung (50) vorgesehen sind.

5. Sävorrichtung nach einem oder mehreren der vorherigen Ansprüche, dadurch gekennzeichnet, daß die beiden Aussparungen (52, 54) in der Halterung (50) je eine konkav und die horizontal verlaufenden Zapfen (48) je eine konvex ausgebildete Oberfläche aufweisen.

6. Sävorrichtung nach einem oder mehreren der vorherigen Ansprüche, dadurch gekennzeichnet, daß an der Rückseite der Sävorrichtung im Bereich der Halterung (50) mindestens ein Verriegelungshaken (39) vorgesehen ist, der mittels einer verstellbaren Verriegelungslasche (38) arretierbar ist.

7. Sävorrichtung nach einem oder mehreren der vorherigen Ansprüche, dadurch gekennzeichnet, daß im vorderen Bereich der Sävorrichtung (10) ein nach vorne offener Haken (44) vorgesehen ist, der durch Verschieben der Sävorrichtung (10) nach vorne einen an dem Paneel vorgesehenen Zapfen (43) untergreift.

8. Sävorrichtung nach den Ansprüchen 1 und 3, dadurch gekennzeichnet, daß der Rahmen (14) aus zwei parallel zueinander verlaufenden Paneelen (22) gebildet ist, wobei am hinteren Ende der Sävorrichtung (10) zwei Halterungen (50) starr angeordnet sind, die mit ihren Aussparungen (52) auf die Zapfen (48) aufsetzbar sind und die sich jeweils an der Außenseite der Paneele vorbei erstrecken und gegen sie zur Anlage gebracht werden können.

9. Sävorrichtung nach einem oder mehreren der vorherigen Ansprüche, dadurch gekennzeichnet, daß beim Aufsetzen der ersten Aussparung (52) auf den entsprechenden Zapfen (48) und bei Einnahme der horizontalen Arbeitsstellung der Sävorrichtung (10) eine Antriebsverbindung zwischen einer in der Sävorrichtung vorgesehenen Dosiervorrichtung (26) und einer Hauptantriebsvorrichtung (32) automatisch herstellbar ist.

Fig. 1

Fig. 2

Fig. 3

Fig. 4

0140262

2/2

Fig.5

Fig.6

Fig.7

Fig.8

**0140262**

Nummer der Anmeldung

Europäisches
Patentamt

# EUROPÄISCHER RECHERCHENBERICHT

EP  84 11 2358

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | US-A-3 714 913  (E.S.  GANDRUD) Figur  1,  Spalte  2,  Zeile 66 – Spalte 3, Zeile 18 * | 1 | A 01 C   15/00 |
| | -  - - - - - | | |

| | | | RECHERCHIERTE SACHGEBIETE (Int. Cl.4) |
|---|---|---|---|
| | | | A 01 B   49/00 A 01 B   51/00 A 01 C    7/00 A 01 C   15/00 |

Der vorliegende Recherchenbericht wurde für alle Patentansprüche erstellt.

| Recherchenort | Abschlußdatum der Recherche | Prüfer |
|---|---|---|
| BERLIN | 09-01-1985 | WUNDERLICH J E |